(19) Europäisches Patentamt
European Patent Office
Office européen des brevets

(11) EP 1 624 296 B1

(12) # EUROPÄISCHE PATENTSCHRIFT

(45) Veröffentlichungstag und Bekanntmachung des Hinweises auf die Patenterteilung:
**06.10.2010 Patentblatt 2010/40**

(51) Int Cl.:
***G01N 17/00** (2006.01)*

(21) Anmeldenummer: **05015666.0**

(22) Anmeldetag: **19.07.2005**

(54) **Regelung der UV-Strahlungsquellen einer Bewitterungsvorrichtung auf der Basis der gemittelten Strahlungsintensität**

Controlling the UV radiation of a weathering device based on average radiation intensity

Regulation du rayonnement UV dans des installations simulant des conditions climatologiques en fonction d'intensité de radiation moyenne

(84) Benannte Vertragsstaaten:
**DE FR GB**

(30) Priorität: **03.08.2004 DE 102004037603**

(43) Veröffentlichungstag der Anmeldung:
**08.02.2006 Patentblatt 2006/06**

(73) Patentinhaber: **Atlas Material Testing Technology GmbH**
**63589 Linsengericht/Altenhasslau (DE)**

(72) Erfinder:
- **Schönlein, Artur**
**65428 Rüsselsheim (DE)**
- **Börner, Bernhard**
**63579 Feigericht (DE)**
- **Rudolph, Bernd**
**63755 Alzenau (DE)**
- **March, Peter**
**60326 Frankfurt am Main (DE)**

(74) Vertreter: **Patentanwälte Lambsdorff & Lange**
**Dingolfinger Strasse 6**
**81673 München (DE)**

(56) Entgegenhaltungen:

| | |
|---|---|
| **EP-A- 1 571 439** | **DE-A1- 2 043 217** |
| **DE-A1- 2 940 325** | **US-A- 5 206 518** |
| **US-A- 5 220 840** | **US-A1- 2002 062 787** |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren und eine Anordnung zur Regelung der UV-Strahlungsquellen einer Bewitterungsvorrichtung.

In einer Bewitterungsvorrichtung wird eine Bewertung des witterungsbedingten Alterungsverhaltens einer Probe, insbesondere einer flächigen Werkstoffprobe, durchgeführt, wobei die Probe einer künstlichen Bewitterung ausgesetzt wird. Die Bewitterungsvorrichtung weist zu diesem Zweck üblicherweise eine Bewitterungskammer auf, in welcher Halterungsmittel für die Halterung von zu bewitternden Proben und eine oder mehrere Strahlungsquellen zur Beaufschlagung der Proben mit Strahlung, insbesondere mit UV-Strahlung, angeordnet sind.

In derartigen Vorrichtungen zur künstlichen Bewitterung von Werkstoffproben soll zumeist die Lebensdauer von Werkstoffen abgeschätzt werden, die in ihrer Abwendung ständig den natürlichen Wetterverhältnissen ausgesetzt sind und sich somit unter klimatischen Einflüssen wie Sonnenlicht, Sonnenwärme, Feuchtigkeit und dergleichen verschlechtern. Um eine gute Simulation der natürlichen Witterungsgegebenheiten zu erhalten, ist es von Vorteil, wenn die spektrale Energieverteilung des in der Vorrichtung erzeugten Lichtes möglichst derjenigen der natürlichen Sonnenstrahlung entspricht, aus welchem Grund in solchen Geräten als Strahlungsquelle Xenon-Strahler eingesetzt werden. Zusätzlich wird eine zeitraffende Alterungsprüfung der Werkstoffe im Wesentlichen durch eine gegenüber den natürlichen Verhältnissen stark intensivierte Bestrahlung der Proben erzielt, wodurch die Alterung der Proben beschleunigt wird. Somit lässt sich nach verhältnismäßig kurzer Zeit eine Aussage über das Langzeit-Alterungsverhalten einer Werkstoffprobe machen.

Ein Großteil der in künstlichen Bewitterungsgeräten untersuchten Werkstoffproben besteht aus polymeren Werkstoffen. Bei diesen wird die witterungsbedingte Verschlechterung im Wesentlichen durch den UV-Anteil der Sonnenstrahlung hervorgerufen. Die dabei ablaufenden fotochemischen Primärprozesse, also die Absorption von Photonen und die Erzeugung angeregter Zustände oder freier Radikale, sind temperaturunabhängig. Dagegen können die nachfolgenden Reaktionsschritte mit den Polymeren oder Additiven temperaturabhängig sein, so dass die beobachtete Alterung der Werkstoffe ebenfalls temperaturabhängig ist.

In den bisher bekannten Bewitterungsvorrichtungen werden üblicherweise eine Mehrzahl von UV-Strahlungsquellen wie Xenon-Strahlungsquellen eingesetzt. Mit diesen kann bekanntermaßen das Sonnenspektrum recht gut simuliert werden, wobei jedoch die emittierte Strahlung einen relativ hohen Spektralanteil im infraroten Spektralbereich aufweist. Innerhalb der Lebensdauer einer handelsüblichen Xenon-Strahlungsquelle von ca. 1500 Stunden nimmt die emittierte UV-Strahlungsleistung relativ zu der zugeführten elektrischen Leistung kontinuierlich ab. Um gleichwohl die UV-Strahlungsleistung über die gesamte Lebensdauer hinweg, insbesondere jedoch innerhalb eines Bewitterungsvorgangs, konstant zu halten, wird in konventionellen Bewitterungsvorrichtungen eine Regelung eingesetzt. Diese sieht vor, dass die von jeder UV-Strahlungsquelle abgegebene Strahlungsleistung individuell durch einen UV-Sensor gemessen wird und dessen Ausgangssignal als Regelgröße für die der UV-Strahlungsquelle zuzuführende elektrische Leistung verwendet wird. Bei einem Rückgang der Strahlungsleistung reagiert jeder der Regelkreise mit einer Erhöhung der zugeführten elektrischen Leistung derart, dass wieder die ursprüngliche Strahlungsleistung erzielt wird.

Diese individuelle Regelung der Strahlungsquellen besitzt den Vorteil, dass die UV-Strahlungsleistung sämtlicher Strahlungsquellen auf ein und demselben Pegel zeitlich konstant gehalten werden kann. Der Nachteil besteht jedoch darin, dass die üblicherweise verwendeten Strahlungsquellen, insbesondere Xenon-Strahlungsquellen, im Infrarot-Bereich nicht oder nicht so stark wie im UV-Bereich degradieren. Die Beaufschlagung der Strahlungsquellen mit verschiedener elektrischer Leistung zum Ausgleich der Unterschiede in der UV-Strahlungsleistung führt somit dazu, dass die Strahlungsquellen unterschiedliche Strahlungsleistungen im Infraroten emittieren. Dies bedeutet jedoch, dass die zu bewitternden Proben unterschiedlich stark erwärmt werden und sich verschiedene Temperaturen auf ihnen einstellen. Aufgrund der oben erwähnten Temperaturabhängigkeiten der Alterung sind somit die Ergebnisse der Bewitterung nur noch bedingt verlässlich.

Ein weiterer Nachteil der Beaufschlagung der Strahlungsquellen mit unterschiedlichen elektrischen Leistungen besteht darin, dass die höher belasteten Strahlungsquellen aufgrund der höheren Belastung noch schneller altern und somit in einem sich verstärkenden Prozess aufgrund der schnelleren Alterung noch höher mit elektrischer Leistung beaufschlagt werden müssen. Dies kann zu einer erheblichen Verkürzung von deren Lebensdauern führen.

Die Druckschrift US 5,206,518 beschreibt ein Bewitterungsgerät, welches unter anderem eine Regelungsanordnung für die UV-Strahlungsquellen des Bewitterungsgeräts umfasst. Die Regelungsanordnung weist Sensoren zum Messen der Strahlungsleistung der UV-Strahlungsquellen im UV-Bereich und eine Kontrolleinrichtung zur Steuerung der Strahlungsleistung der UV-Strahlungsquellen auf. Die Kontrolleinrichtung liefert in Abhängigkeit der gemessenen Strahlungsleistungen Steuersignale an die Stromversorgung der Strahlungsquellen.

Es ist somit Aufgabe der vorliegenden Erfindung, ein Verfahren und eine Anordnung zur Regelung der Strahlungsquellen einer Bewitterungsvorrichtung anzugeben, die eine zufriedenstellende Regelung der Strahlungsquellen bereitstellen, ohne dass Temperaturungleichgewichte auf den Proben erzeugt werden und/oder die Lebensdauer der Strahlungsquellen übermäßig verkürzt wird. Insbesondere soll dem Auseinanderdriften der UV-Strahlungsleistungen der Strahlungsquellen entgegengewirkt werden, ohne dass dadurch Unterschiede in der Infrarot-Strahlungsleistung hervorgerufen werden.

Diese Aufgabe wird durch die Merkmale der unabhängigen Patentansprüche gelöst. Vorteilhafte Weiterbildungen und Ausgestaltungen sind in den Unteransprüchen angegeben.

Ein wesentlicher Aspekt der Erfindung besteht darin, dass die mittlere Strahlungsleistung der UV-Strahlungsquellen der Bewitterungsvorrichtung ermittelt und für die Regelung verwendet wird. Es werden somit die Strahlungsquellen nicht mehr individuell geregelt, sondern es werden deren Strahlungsleistungen detektiert, über diese detektierten Strahlungsleistungen gemittelt und auf der Basis der gemittelten Strahlungsleistung die Strahlungsquellen geregelt.

Bei dem erfindungsgemäßen Verfahren wird somit die Strahlungsleistung jeder der Strahlungsquellen in einem vorgegebenen spektralen Bereich der von den Strahlungsquellen emittierten Strahlung gemessen, wobei der spektrale Bereich derart gewählt ist, dass die gemessene Strahlungsleistung für die Strahlungsleistung im UV repräsentativ ist. Dann wird aus den gemessenen Strahlungsleistungen eine gemittelte Strahlungsleistung berechnet und die gemittelte Strahlungsleistung wird für die Regelung der den Strahlungsquellen zuzuführenden elektrischen Leistung herangezogen.

Bevorzugtermassen wird die Strahlungsleistung der Strahlungsquellen direkt im UV-Bereich gemessen. Dies kann in vorteilhafter Weise durch UV-Breitbandsensoren mit einem Empfindlichkeitsbereich von 300 nm bis 400 nm geschehen. Es können aber auch Sensoren für einen spektral kleineren Empfindlichkeitsbereich, beispielsweise 330-350 nm, gewählt werden. Da die Strahlungsquelle derart beschaffen sein kann, dass sie nicht nur im UV, sondern zumindest auch noch in einem Teilbereich des angrenzenden sichtbaren Spektralbereichs emittiert, kann auch die Strahlungsleistung ausserhalb des UV gemessen werden, beispielsweise im sichtbaren blauen Spektralbereich durch einen Sensor mit einem Empfindlichkeitsbereich von 410 nm bis 430 nm. Es kommt darauf an, dass der spektrale Messbereich derart gewählt ist, dass die gemessene Strahlungsleistung für die Strahlungsleistung im UV, insbesondere für die über den gesamten UV-Bereich integrierte Strahlungsleistung, repräsentativ ist. Insbesondere kann ein festes Verhältnis zwischen beiden Strahlungsleistungen bestehen, so dass die Strahlungsleistung im UV jederzeit durch Multiplikation der Strahlungsleistung im Sichtbaren mit einer Konstanten berechnet werden kann.

Das erfindungsgemäße Konzept beinhaltet somit eine Regelung, bei der der Abfall in der UV-Strahlungsleistung einer einzelnen Strahlungsquelle nicht lediglich von dieser allein kompensiert wird, sondern gleichsam die zu erbringende Kompensationsleistung auf alle Strahlungsquellen gleichmäßig verteilt wird. Es kommt nicht mehr darauf an, dass jede einzelne Strahlungsquelle konstante UV-Strahlungsleistung liefert. Vielmehr ist entscheidend, dass die mittlere UV-Strahlungsleistung sich wie vorgegeben verhält, insbesondere zeitlich konstant bleibt.

Es gibt dementsprechend auch nicht wie im Stand der Technik eine der Anzahl der Strahlungsquellen entsprechende Anzahl von unabhängigen Regelkreisen, sondern im Grunde gibt es nur noch einen gemeinsamen Regelkreis, in dem die mittlere Strahlungsleistung die Messgröße ist und deren Abweichung von einem Sollwert als Regelgröße für die Regelung aller Strahlungsquellen verwendet wird. Diese werden somit stets untereinander nominell mit der gleichen elektrischen Leistung beaufschlagt, die entsprechend der Regelung zeitlich veränderlich ist.

Bevorzugtermaßen wird somit die den Strahlungsquellen zuzuführende elektrische Leistung derart geregelt, dass die gemittelte Strahlungsleistung zeitlich konstant bleibt.

Die Regelung sollte derart durchgeführt werden, dass den Strahlungsquellen untereinander die gleiche elektrische Leistung innerhalb einer vorgegebenen Toleranzbandbreite zugeführt wird. Diese Toleranzbandbreite kann beispielsweise ± 2% betragen.

Die Strahlungsleistungen der einzelnen Strahlungsquellen können in regelmäßigen Zeitabständen gemessen und daraus die mittlere Strahlungsleistung berechnet werden. Ein inkrementelles Absinken der mittleren Strahlungsleistung veranlasst die Regelung dazu, die elektrische Leistung der Strahlungsquellen gleichmäßig zu erhöhen, bis wieder der ursprüngliche Wert der mittleren Strahlungsleistung erreicht ist.

Die Detektion der Strahlungsleistung kann - wie bereits angedeutet - durch Breitbandmessung im Bereich 300 bis 400 nm entsprechend dem IS-Standard und entsprechend dafür ausgebildeten UV-Sensoren erfolgen. Alternativ dazu kann sie auch durch Schmalbandmessung im Bereich 330 nm bis 350 nm entsprechend dem NB-Standard durchgeführt werden. Ein weiterer im NB-Standard vorgesehener und für das erfindungsgemäße Verfahren verwendbarer Messbereich ist der von 410 nm bis 430 nm, der außerhalb des UV im sichtbaren Spektralbereich liegt.

Eine erfindungsgemäße Anordnung zur Regelung der Strahlungsquellen einer Bewitterungsvorrichtung weist Sensoren zum Messen der Strahlungsleistungen der Strahlungsquellen und eine Kontrolleinrichtung zum Berechnen einer gemittelten Strahlungsleistung aus den gemessenen Strahlungsleistungen und zum Erzeugen von Steuersignalen für die den Strahlungsquellen zuzuführende elektrische Leistung auf.

Die Kontrolleinrichtung weist Eingänge auf, die mit den Ausgängen der Sensoren verbunden sind und sie weist ferner Ausgänge auf, die mit Steuereingängen von Leistungsversorgungs-Einrichtungen der Strahlungsquellen verbunden sind.

Die Erfindung bezieht sich ebenso auf eine Bewitterungsvorrichtung mit einer Bewitterungskammer, UV-Strahlungsquellen und einer wie oben beschriebenen Anordnung zur Regelung der Strahlungsquellen.

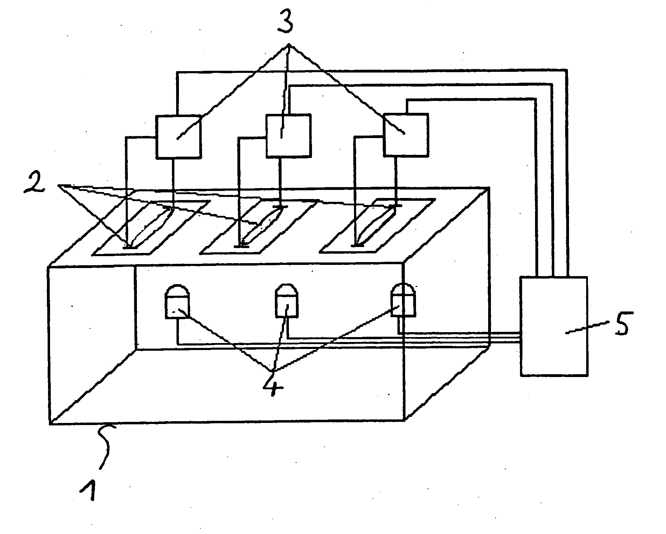

In der einzigen Zeichnungsfigur der Anmeldung ist ein Ausführungsbeispiel für eine erfindungsgemäße Anordnung schematisch dargestellt.

Eine Bewitterungsvorrichtung weist eine Bewitterungskammer 1 auf, in der zu untersuchende Werkstoffproben künstlichen Bewitterungsbedingungen ausgesetzt werden können. Zu diesem Zweck sind in der dargestellten Art von Bewitterungsvorrichtungen in Öffnungen einer Innenwand eine Mehrzahl von UV-Strahlungsquellen angebracht. Bevorzugtermaßen sind die Strahlungsquellen wie im dargestellten Fall an einer der beiden gegenüberliegenden, flächenmäßig größten Innenwände der Bewitterungskammer 1 angebracht. In der gegenüberliegenden Innenwand können die zu bewitternden Werkstoffproben (nicht dargestellt) angebracht werden, wobei diese vorzugsweise branchenübliche Standardabmessungen aufweisen und in entsprechend dimensionierten Aussparungen in dieser Innenwand platziert werden. Die Werkstoffproben sind demnach den UV-Strahlungsquellen 2 gegenüberliegend angeordnet. Von jeder der UV-Strahlungsquellen 2 wird ein divergentes Strahlungsbündel emittiert. Die Strahlungsbündel überlagern sich gegenseitig in der Probenebene. Die Innenwände der Bewitterungskammer 1 sind bevorzugtermaßen mit einer stark UVreflektierenden Beschichtung wie einer Aluminium-Beschichtung versehen, um eine optimale Ausnutzung der emittierten UV-Strahlung zu erhalten. In Probenebene ergibt sich eine annähernd homogene konstante UV-Strahlungsleistung.

Die UV-Strahlungsquellen 2 werden insbesondere, jedoch nicht ausschließlich, durch Xenon-Strahlungsquellen gebildet. Deren relativ hoher Spektralanteil im infraroten Spektralbereich ist - wie eingangs erwähnt - ein Teil des Ausgangsproblems der vorliegenden Erfindung. Gewünschtenfalls kann zusätzlich ein Infrarot-Filter zwischen den Xenon-Strahlungsquellen und den Proben angeordnet werden.

Es kommen jedoch auch andere Strahlungsquellen infrage, insbesondere auch solche, bei denen die eingangs erwähnte Problematik der ungleichen Infrarot-Strahlungsbelastung und somit ungleichen Wärmebeaufschlagung der Proben keine oder keine so große Rolle spielt. Die Erfindung wirkt sich auch bei solchen Strahlungsquellen insofern vorteilhaft aus, als sie das ebenfalls eingangs erwähnte Problem der ungleichen Beaufschlagung der Strahlungsquellen mit elektrischer Leistung löst. Beispielsweise kann als Strahlungsquelle auch eine Halogenlampe, insbesondere eine Metall-Halogenlampe, eingesetzt werden, wenngleich derartige Strahlungsquellen etwas schwerer regelbar sind als Xenon-Lampen. Als Strahlungsquellen sind auch Fluoreszenz-Lampen denkbar, wenngleich diese im Allgemeinen kürzere Lebensdauern als die zuvor erwähnten Strahlungsquellen aufweisen. Des Weiteren können als Strahlungsquellen auch UV-Lichtemissionsdioden, insbesondere solche auf GaN-Basis eingesetzt werden, wobei die Infrarot-Problematik in diesem Fall zur Gänze bedeutungslos werden würde. Mit GaN-LEDs kann mittlerweile der gesamte UV-Bereich des Sonnenspektrums zufriedenstellender Weise abgedeckt werden. Die erreichbaren Strahlungsdichten sind bereits so hoch, dass durch mehrfache Anordnung von UV-LEDs die Strahlungsleistung einer konventionellen Xenon-Lampe problemlos erreicht werden kann. Die in der Zeichnungsfigur dargestellten Strahlungsquellen 2 können somit beispielsweise durch jeweils eine einzelne UV-LED oder ein Array aus mehreren UV-LEDs gebildet sein.

In dem in der Zeichnungsfigur dargestellten Ausführungsbeispiel sind drei Strahlungsquellen 2 dargestellt. Diese Anzahl ist jedoch für die Erfindung ohne Bedeutung. Es können auch zwei Strahlungsquellen oder mehr als drei Strahlungsquellen vorgesehen sein. Auch müssen diese nicht notwendigerweise an ein und derselben Innenwand der Bewitterungskammer angeordnet sein. Sie können auch auf verschiedene Innenwände verteilt sein. Insbesondere ist die Erfindung auch für andere Arten von Bewitterungsvorrichtungen mit anderer Geometrie einsetzbar. Die zu bewitternden Proben werden entweder auf die Bodenplatte der Bewitterungskammer in geeignete Vertiefungen darin eingesetzt oder in gleicher Weise in eine Aufnahmeplatte eingesetzt, die oberhalb der Bodenplatte parallel zu dieser angeordnet und in geeigneter Weise in der Bewitterungskammer befestigt ist.

Erfindungsgemäß wird die Strahlungsleistung jeder der Strahlungsquellen in einem vorgegebenen spektralen Bereich gemessen. Diesem Zweck dienen im dargestellten Ausführungsbeispiel UV-Sensoren 4, wobei prinzipiell jeder Strahlungsquelle 2 ein UV-Sensor 4 zugeordnet ist. Diese UV-Sensoren 4 sind bevorzugtermaßen wie dargestellt in Öffnungen einer Seitenwand der Bewitterungskammer 1 derart eingesetzt, dass sie schräg nach oben auf die jeweils zugehörige Strahlungsquelle 2 ausgerichtet sind. Sie sind vorzugsweise für eine Breitbandmessung in dem UV-Bereich 300 bis 400 nm gemäß dem IS-Standard ausgelegt. Alternativ dazu können sie jedoch auch gemäß dem NB-Standard für Schmalbandmessungen in dem Bereich 340 nm ($\pm$ 10 nm) oder in dem schon sichtbaren Bereich 420 nm ($\pm$ 10 nm) ausgelegt sein. In letzterem Fall würden sie jedoch nicht mehr als UV-Sensoren bezeichnet werden.

Die UV-Sensoren 4 sind ausgangsseitig mit einer entsprechenden Anzahl Eingängen einer Kontrolleinrichtung 5 verbunden, an die sie die gemessenen Werte der UV-Strahlungsleistung liefern. Die Kontrolleinrichtung 5 berechnet den Mittelwert der von den UV-Sensoren 4 gemessenen und gelieferten Strahlungsleistungen der Strahlungsquellen 2, insbesondere also den arithmetischen Mittelwert.

$$\hat{I}_M = \frac{1}{M} \sum_{N=1}^{M} I_N \quad ,$$

wobei M die Anzahl der Strahlungsquellen 2, IN die Strahlungsleistung der N-ten Strahlungsquelle 2 und N der laufende Index der Strahlungsquellen 2 ist.

Die Kontrolleinrichtung 5 regelt die den Strahlungsquellen 2 zuzuführende elektrische Leistung auf der Basis des von ihr berechneten Mittelwerts der Strahlungsleistungen. Zu diesem Zweck ist sie mit den Leistungsversorgungs-Einrichtungen 3 der Strahlungsquellen 2 verbunden. Jeder Strahlungsquelle 2 ist eine eigene Leistungsversorgungs-Einrichtung 3, also eine Spannungs- oder Stromquelle, zugeordnet. Jede Leistungsversorgungs-Einrichtung 3 weist zudem einen Steuereingang auf und jeder der Steuereingänge der Leistungsversorgungs-Einrichtungen 3 ist mit einem entsprechenden Ausgang der Kontrolleinrichtung 5 verbunden.

Die von der Kontrolleinrichtung 5 durchzuführende Regelung kann beispielsweise so erfolgen, dass ein von ihr anfänglich während des Betriebs der Bewitterungsvorrichtung berechneter Mittelwert der Strahlungsleistung gespeichert und fortan als Sollwert für die mittlere Strahlungsleistung angesehen wird. Die Leistungsversorgungs-Einrichtungen 3 werden dann derart angesteuert, dass sich stets dieser Sollwert der mittleren Strahlungsleistung ergibt, somit für die Dauer des Betriebs der Bewitterungsvorrichtung konstant gehalten wird. Falls somit eine oder mehrere Strahlungsquellen 2 hinsichtlich ihrer UV-Strahlungsleistung degradieren, so wird von der Kontrolleinrichtung 5 eine Abnahme der mittleren Strahlungsleistung festgestellt. Die Kontrolleinrichtung 5 übermittelt darauf hin Steuersignale an die Leistungsversorgungs-Einrichtungen 3 derart, dass diese die ihren jeweiligen Strahlungsquellen 2 zuzuführende elektrische Leistung gleichmäßig erhöhen. Die Kontrolleinrichtung 5 kann beispielsweise dafür ausgelegt sein, dass sie aus der von ihr ermittelten Abnahme der mittleren Strahlungsleistung berechnet, um welchen Betrag die von jeder der Leistungsversorgungs-Einrichtungen 3 gelieferte elektrische Leistung zur Wiederherstellung des Sollwerts der mittleren Strahlungsleistung gesteigert werden muss. Zu diesem Zweck können in der Kontrolleinrichtung 5 die Kennlinien der Strahlungsquellen 2 gespeichert sein.

Es kann ferner vorgesehen sein, dass die Kontrolleinrichtung 5 in regelmäßigen Zeitabständen die von den Uv-Sensoren 4 gemessenen Strahlungsleistungen abfragt und daraus einen Ist-Wert der mittleren Strahlungsleistung berechnet. Falls dieser Ist-Wert von dem Sollwert der mittleren Strahlungsleistung abweicht, insbesondere um mehr als einen rauschbedingten Schwellwert abweicht, wird die Regelung aktiviert und die Leistungsversorgungs-Einrichtungen 3 dazu veranlasst, ihre abgegebene elektrische Leistung zu erhöhen oder gegebenenfalls auch zu erniedrigen.

Hinsichtlich der Art der Regelung durch die Kontrolleinrichtung 5 kann eine einfache Proportional-Regelung vorgesehen sein, bei der die Erhöhung der elektrischen Leistung proportional zu dem Betrag des Rückgangs der mittleren Strahlungsleistung eingestellt wird. Insbesondere um Schwingungen zu vermeiden, wie sie häufig bei derartigen Regelvorgängen auftreten, kann jedoch auch in an sich bekannter Weise eine aufwändigere Regelung, etwa eine Proportional-Integral-(PI-) Regelung oder eine Proportional-Integral-Differential-(PID-) Regelung vorgesehen sein, bei der für die Ermittlung des den Leistungsversorgungs-Einrichtungen 3 zuzuführenden Steuersignals nicht bloß eine aktuell ermittelte Abweichung zwischen Sollwert und Ist-Wert der mittleren Strahlungsleistung sondern auch zusätzlich zurückliegend ermittelte Werte berücksichtigt werden.

## Patentansprüche

**1.** Verfahren zur nicht-individuellen Regelung der UV-Strahlungsquellen (2) einer Bewitterungsvorrichtung, bei welchem

- die Strahlungsleistung jeder der Strahlungsquellen (2) in einem vorgegebenen spektralen Bereich der von den Strahlungsquellen emittierten Strahlung gemessen wird, wobei der spektrale Bereich derart gewählt ist, dass die gemessene Strahlungsleistung für die Strahlungsleistung im UV repräsentativ ist,
- aus den gemessenen Strahlungsleistungen eine gemittelte Strahlungsleistung berechnet wird, und
- die gemittelte Strahlungsleistung für die Regelung der den Strahlungsquellen (2) zuzuführenden elektrischen Leistung herangezogen wird.

**2.** Verfahren nach Anspruch 1, **dadurch gekennzeichnet, dass**

- die elektrische Leistung derart geregelt wird, dass die gemittelte Strahlungsleistung zeitlich konstant bleibt.

**3.** Verfahren nach Anspruch 1 oder 2, **dadurch gekennzeichnet, dass**

- die Regelung derart durchgeführt wird, dass den Strahlungsquellen untereinander die gleiche elektrische Leistung innerhalb einer vorgegebenen Toleranzbandbreite zugeführt wird.

**4.** Verfahren nach Anspruch 1 oder 2, **dadurch gekennzeichnet, dass**

- in regelmäßigen Zeitabständen aus gemessenen Strahlungsleistungen eine gemittelte Strahlungsleistung berechnet wird.

**5.** Anordnung zur Regelung der UV-Strahlungsquellen einer Bewitterungsvorrichtung, umfassend

- Sensoren (4) zum Messen der Strahlungsleistungen der UV-Strahlungsquellen (2) in einem spektralen Bereich der von den Strahlungsquellen emittierten Strahlung, wobei der spektrale Bereich derart gewählt ist, dass die gemessene Strahlungsleistung für die Strahlungsleistung im UV repräsentativ ist,
- eine Kontrolleinrichtung (5), die so eingerichtet ist, dass sie aus den gemessenen Strahlungsleistungen eine gemittelte Strahlungsleistung berechnet und aus der gemessenen Strahlungsleistung Steuersignale für die den Strahlungsquellen (2) zuzuführende elektrische Leistung berechnet.

**6.** Anordnung nach Anspruch 5, **dadurch gekennzeichnet, dass**

- jede Strahlungsquelle (2) mit einer LeistungsversorgungsEinrichtung (3) verbunden ist und jede Leistungsversorgungs-Einrichtung (3) einen Steuereingang aufweist, der mit einem Ausgang der Kontrolleinrichtung (5) verbunden ist.

**7.** Bewitterungsvorrichtung mit einer Bewitterungskammer (1), UV-Strahlungsquellen (2) und einer Anordnung zur Regelung der UV-Strahlungsquellen (2) nach Anspruch 5 oder 6.

**8.** Bewitterungsvorrichtung nach Anspruch 7, **dadurch gekennzeichnet, dass**

- sie eine Bewitterungskammer (1) aufweist, in der die Strahlungsquellen (2) und die Sensoren (4) untergebracht sind, wobei
- die Strahlungsquellen (2) entlang einer ersten Wand der Bewitterungskammer (1) und die zu bewitternden Proben entlang einer der ersten Wand gegenüberliegenden zweiten Wand angeordnet sind, und
- an einer die erste und die zweite Wand verbindenden dritten Innenwand die UV-Sensoren (4) angebracht sind, insbesondere in Öffnungen der dritten Wand eingesetzt sind.

**9.** Bewitterungsvorrichtung nach Anspruch 8, **dadurch gekennzeichnet, dass**

- die zu bewitternden Proben von der zweiten Wand oder einer Aufnahmeplatte gehaltert werden.

**Claims**

**1.** Method for non-individual controlling the UV radiation sources (2) in a weathering apparatus, in which

- the radiation power of each of the radiation sources (2) is measured in a predetermined spectral range of the radiation emitted from the radiation sources (2), with the spectral range being chosen such that the measured radiation power is representative of the radiation power in the UV,
- an averaged radiation power is calculated from the measured radiation powers, and
- the averaged radiation power is used for controlling the electrical power to be supplied to the radiation sources (2).

**2.** Method according to Claim 1, **characterized in that**

- the electrical power is controlled such that the averaged radiation power remains constant over time.

**3.** Method according to Claim 1 or 2, **characterized in that**

- the control process is carried out in such a way that the same electrical power, within a predetermined tolerance bandwidth, is supplied to each of the radiation sources (2).

**4.** Method according to Claim 1 or 2, **characterized in that**

- an averaged radiation power is calculated from measured radiation powers at regular time intervals.

**5.** Arrangement for controlling the UV radiation sources in a weathering apparatus, comprising:

- sensors (4) for measurement of the radiation powers of the UV radiation sources (2) in a spectral range of the radiation emitted from the radiation sources, with the spectral range being chosen such that the measured radiation power is representative of the radiation power in the UV,
- a monitoring device (5) for calculating an averaged radiation power from the measured radiation powers, and for production of control signals for the electrical power to be supplied to the radiation sources (2).

**6.** Arrangement according to Claim 5, **characterized in that**

- each radiation source (2) is connected to a power supply device (3), and each power supply device (3) has a control input which is connected to an output of the monitoring device (5).

7. Weathering apparatus having a weathering chamber (1), having UV radiation sources (2) and having an arrangement for controlling the UV radiation sources (2), according to Claim 5 or 6.

8. Weathering apparatus according to Claim 7, **characterized in that**

- it has a weathering chamber (1) in which the radiation sources (2) and the sensors (4) are accommodated,

wherein

- the radiation sources (2) are arranged along a first wall of the weathering chamber (1), and the samples to be weathered are arranged along a second wall, which is opposite the first wall, and
- the UV sensors (4) are fitted to a third inner wall, which connects the first wall and the second wall, and in particular are inserted into openings in the third wall.

9. Weathering apparatus according to Claim 8, **characterized in that**

- the samples to be weathered are held by the second wall or a holding plate.

## Revendications

1. Procédé pour la régulation non individuelle des sources de rayonnement UV (2) d'un dispositif simulant des conditions climatologiques, dans lequel :

- la puissance de rayonnement de chacune des sources de rayonnement (2) est mesurée dans une zone spectrale prescrite du rayonnement émis par les sources de rayonnement, la zone spectrale étant alors choisie de telle sorte que la puissance de rayonnement mesurée est représentative pour la puissance de rayonnement dans l'UV ;
- une puissance de rayonnement moyennée est calculée à partir des puissances de rayonnement mesurées ; et
- la puissance de rayonnement moyennée est prise en considération pour la régulation de la puissance électrique devant être amenée vers les sources de rayonnement (2).

2. Procédé selon la revendication 1, **caractérisé en ce que**

- la puissance électrique est régulée de telle sorte que la puissance de rayonnement moyennée reste constante sur le temps.

3. Procédé selon l'une ou l'autre des revendications 1 et 2, **caractérisé en ce que**

- la régulation est exécutée de telle sorte que la même puissance électrique est amenée vers les sources de rayonnement entre elles, à l'intérieur d'une largeur de bande de tolérance prescrite.

4. Procédé selon l'une ou l'autre des revendications 1 et 2, **caractérisé en ce que**

- une puissance de rayonnement moyennée est calculée à intervalles de temps réguliers à partir des puissances de rayonnement mesurées.

5. Système pour la régulation des sources de rayonnement UV d'un dispositif simulant des conditions climatologiques, comportant :

- des capteurs (4) pour mesurer les puissances de rayonnement des sources de rayonnement UV (2) dans une zone spectrale du rayonnement émis par les sources de rayonnement, la zone spectrale étant alors choisie de telle sorte que la puissance de rayonnement mesurée est représentative pour la puissance de rayonnement dans l'UV ;
- un dispositif de contrôle (5) qui est mis au point de manière à calculer une puissance de rayonnement moyennée à partir des puissances de rayonnement mesurées et à calculer des signaux de commande pour la puissance électrique devant être amenée vers les sources de rayonnement (2) à partir de la puissance de rayonnement mesurée.

6. Système selon la revendication 5, **caractérisé en ce que**

- chaque source de rayonnement (2) est reliée à un dispositif d'alimentation en puissance (3) et **en ce que** chaque dispositif d'alimentation en puissance (3) présente une entrée de commande qui est reliée à une sortie du dispositif de contrôle (5).

7. Dispositif simulant des conditions climatologiques comprenant une chambre (1) où règnent les conditions climatologiques, des sources de rayonnement UV (2) et un système pour réguler les sources de rayonnement UV (2) selon l'une ou l'autre des revendications 5 et 6.

**8.** Dispositif simulant des conditions climatologiques selon la revendication 7, **caractérisé en ce que**

- il présente une chambre (1) où règnent les conditions climatologiques et dans laquelle sont logés les sources de rayonnement (2) et les capteurs (4), sachant que :
- les sources de rayonnement (2) sont agencées le long d'une première paroi de la chambre (1) où règnent les conditions climatologiques et les échantillons à soumettre aux conditions climatologiques sont agencés le long d'une seconde paroi opposée à la première paroi ; et
- les capteurs UV (4) sont montés sur une troisième paroi intérieure qui relie la première et la seconde paroi, et sont en particulier mis en place dans des ouvertures de la troisième paroi.

**9.** Dispositif simulant des conditions climatologiques selon la revendication 8, **caractérisé en ce que**

- les échantillons à soumettre aux conditions climatologiques sont soutenus par la seconde paroi ou par une plaque de réception.

3
2
5
4
1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5206518 A